# EUROPEAN PATENT APPLICATION

(11) **EP 2 746 041 A1**
(43) Date of publication of application: **25.06.2014**
(21) Application number: 13198301.7
(22) Date of filing: 19.12.2013
(51) Int. Cl.: B32B 5/00, B32B 5/02, B32B 5/08, B32B 5/22, B32B 5/26, B32B 7/00, B32B 7/02, B32B 7/04, B32B 7/12, B32B 27/02, B32B 27/12, B32B 27/34, B32B 27/36, B32B 3/26, D03D 13/00

(54) **Articolo tessile tristrato a perforazione zero ad alta traspirabilita'**

(30) Priority: 20.12.2012 IT FI20120287
(71) Applicant: Manifattura Pri.Ma.Tex S.R.L., 59100 Prato (IT)
(72) Inventor: Priami, Christian, 50014 CALENZANO (IT)
(74) Representative: Brighenti, Livio

(57) **Abstract**

There is described a three-layer pierce-proof textile article with zero penetration with exceptional flexibility, softness, breathability and fineness, where required preserving the antistatic and conductive fabric properties.

## Description

### Field of the invention

The present invention refers to the field of textile articles for accident prevention and protection.

### State of the art

As known, accident prevention and protection safety standards provide for, among other things, the use of footwear fitted with pierce-proof insoles.

Said insoles, when not provided with metal plates, are made of high tenacity multilayer fibers optionally coated with thermoplastic resins to which mineral charges (such as alumina, silica and the like) have been added; these are undoubtedly very strong but have low flexibility, and poor capacity to rapidly absorb and subsequently de-absorb water and therefore are often not particularly comfortable and breathable.

To overcome the disadvantages caused by the presence of the rigid materials indicated above, research has turned its attention to developing insoles consisting of textile products joined to one another with suitable glues.

The patent application FI2011A000223 by the same Applicant describes a two-layer pierce-proof textile in which said two layers consist of a fabric in which the weft and warp consist of threads having the same diameter.

Notwithstanding the unquestionable advantage provided by said articles with respect to those of the prior art, there is still the need to obtain pierce-proof textile articles that are even more flexible and thinner, with increased pierce-proof and breathable properties. Notwithstanding the fact that a third layer has been added, with consequent further lamination, the degree of breathability has been greatly increased compared to the current state of art.

### Brief Description Of The Figures

Fig. 1 schematically shows a sectional view of a textile article according to the invention.
Fig. 2 shows in particular the weft/warp composition (warp profile) of a layer forming the textile article according to Fig. 1.

### Summary Of The Invention

There is described a pierce-proof textile article consisting of two layers of a fabric in which the weft and warp are formed by threads of the same diameter, said layers being separated from one another by a technical fabric of known type.

### Detailed Description Of The Invention

The present invention makes it possible to overcome the aforesaid problems with a textile article consisting of two layers of a fabric in which the weft and warp are formed by threads of the same diameter, said layers being separated from one another by a technical fabric of known type.

In fact, it has surprisingly been found that by laminating a further layer consisting of a technical fabric of known type or of a mesh between two layers of a fabric consisting of yarns formed by high tenacity polyester or nylon filaments (each composed of a high number of interlaced filaments) of known type and with weft and warp of the same diameter, it is possible to obtain a textile article capable of preventing the sharp tip of a nail with a diameter of 4.5 mm from passing through their surface, but above all with exceptional breathability.

Surprisingly, a textile article as described above not only complies with the parameters established by the current standard EN 12568:2010 with zero penetration, but is decidedly more comfortable for the user, practically eliminating all the problems caused by sweating.

Therefore, resistance to puncture has been preserved while providing the final product not only with exceptional properties of elasticity, softness, flexibility and wicking, but also with a noteworthy increase in breathability, notwithstanding the addition of a third layer, with consequent further lamination.

Tests performed on textile articles according to the invention have shown a capacity to absorb even more than 80mg/cm² of water and to release 100% of this water in 24 hours.

The textile article according to the invention therefore preferably consists of two layers of fabric, each of which is in turn formed by a weft in which the number of superimposed threads is comprised between 12 and 16 (preferably 12) and by a warp in which the number of superimposed weft threads is comprised between 12 and 16 (preferably 12) and which thus consists of between 12 and 16 threads

(preferably 12), there being interposed between said layers, intimately adherent thereto, a layer consisting of a technical fabric or a mesh.

The term technical fabric is intended as one of the fabrics of known type, normally made of a synthetic fiber (such as polyester), capable of wicking body moisture (such as gore-tex^{®}, fleece, supermecpor^{®}, etc.).

The term mesh is intended as a knitted net structure made of polyester of another similar fiber.

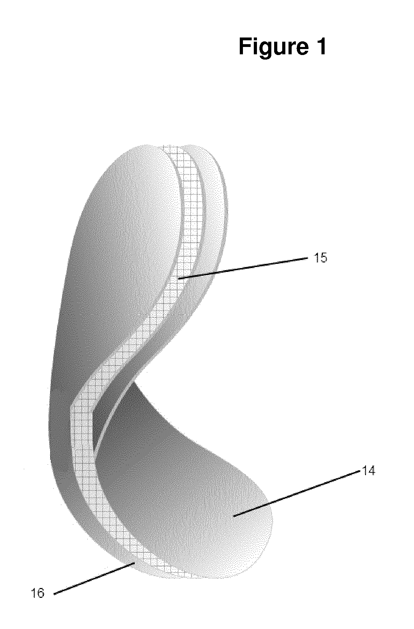

Fig. 1 schematically represents a textile article according to the invention which, as can be seen, is formed by two layers of fabric 14 and 15 between which a layer of technical fabric 16 or mesh is interposed.

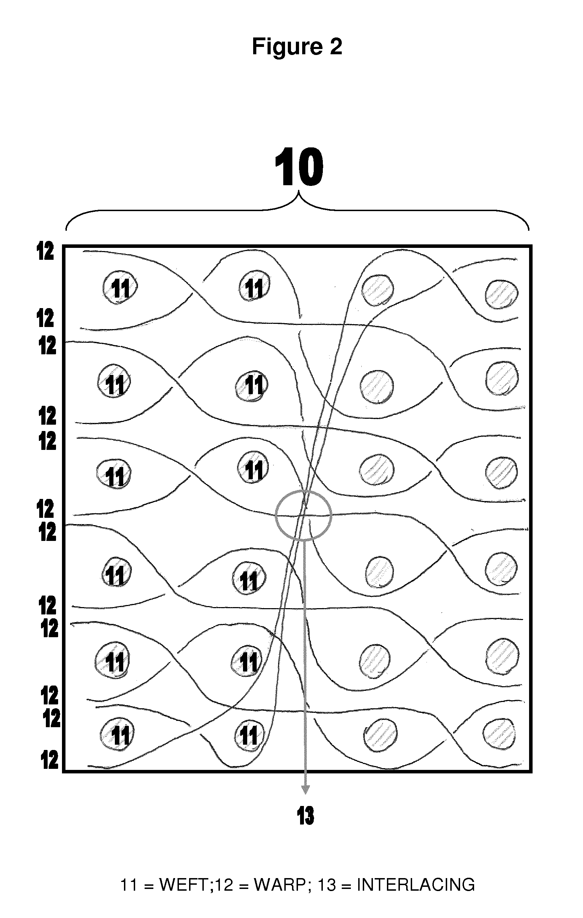

Fig. 2 shows in detail a fabric 10 that forms the aforesaid two layers 14 and 15 of the textile article according to the invention and has a weft consisting of twelve superimposed threads 11 and of twelve warp threads 12 interlaced with one another with sextuple weave as described above.

To manufacture the fabric 10 as defined above, the weft threads 11 are inserted into the warp according to conventional techniques using the looms normally employed to weave articles of this type.

According to the present invention, the yarns used are those normally employed to manufacture textile articles of this type and, as said, are normally constituted by high tenacity polyester or nylon filaments.

The density of the threads that constitute the weft and the warp is comprised between 900 and 1300 dtex, preferably 1100 dtex, the threads of the warp are twisted while those of the weft can be twisted or parallel.

The threads that constitute the weft have the same diameter as the threads that constitute the warp.

The interlacing 13 is also of known type that is normally employed in this field, for example an interlacing during lowering, during lifting or a combination of the two, or by inverting the warp threads as represented in Fig. 2.

The fabric as above normally has 60 to 100 weft threads per cm and 40 to 70 warp threads per cm.

The textile article according to the invention is produced by laminating the two fabric layers with fibers of the same diameter as described above to a technical fabric of known type or a mesh as defined above, by means of glues usually employed for this purpose for products of this type.

Preferably, polyester-based hot melt glues, for example polyester web, are used, with a weight comprised between 30 and 100 g/m², preferably between 20 and 100 g/m², or polyurethane reactive (PUR) glues, once again with the same weight, which after crystallization offer excellent grip even after washing and are nonpolluting and not harmful.

The finished textile article normally has a weight of around 2000 / 3000 g/m².

Naturally, if desired, yarns capable of conferring antistatic or conductive properties can also be inserted into both the weft and the warp of in the fabric forming the textile article according to the invention, according to methods already known in the art. The yarns used for this purpose are normally formed by conductive threads, preferably of polyester type coated in carbon, silver, copper or stainless steel; in this case the density of the warp and of the weft (polyester or nylon plus conductive filament) will be comprised between 1300 and 2000 dtex, preferably 1650 dtex.

The three-layer textile article according to the invention can be used to manufacture insoles for safety shoes according to the methods normally used in the field.

## Claims

1. A three-layer, pierce-proof textile article, two layers of which consist of a fabric the weft and warp of which are formed by threads of the same diameter and are separated from one another by a third layer intimately adherent thereto and consisting of a technical fabric or a mesh.

2. A textile article according to claim 1, wherein the weft of the fabric layers consist of a number of superimposed threads comprised between 12 and 16, preferably 12, and wherein the warp consists of a number of superimposed warp threads comprised between 12 and 16, preferably 12.

3. A textile article according to claims 1 - 2, wherein the weft and warp threads have a density comprised between 900 and 1300 dtex.

4. A textile article according to claim 3, wherein the weft and warp threads have a density of 1100 dtex.

5. A textile article according to claim 1, wherein said three layers are joined to one another by means of glues usually employed for this purpose for this type of items.

6. A textile article according to claims 1-5, comprising weft and warp fibers capable of conferring antistatic or conductive properties to the fabric.

7. A textile article according to claim 6, wherein the weft and warp threads have a density comprised between 1300 and 2000 dtex, preferably 1650 dtex.

8. A textile article according to claims 1 - 7, wherein the yarns consist of high strength polyester or nylon fibers, possibly twisted.

9. A pierce-proof shoe insole comprising a textile article according to claims 1 -9.

10. A pierce-proof shoe comprising an insole according to claim 9.
